(19) Europäisches Patentamt
European Patent Office
Office européen des brevets

(11) Veröffentlichungsnummer: **0 181 542**
**B1**

# (12) EUROPÄISCHE PATENTSCHRIFT

(45) Veröffentlichungstag der Patentschrift: **23.09.87**

(51) Int. Cl.⁴: **C 08 L 59/02**, C 08 K 3/34 // (C08L59/02, 83:00, 23:04)

(21) Anmeldenummer: **85113567.3**

(22) Anmeldetag: **25.10.85**

(54) **Thermoplastische Polyoxymethylenformmassen mit hoher Abriebfestigkeit.**

(30) Priorität: **14.11.84 DE 3441546**

(43) Veröffentlichungstag der Anmeldung: **21.05.86 Patentblatt 86/21**

(45) Bekanntmachung des Hinweises auf die Patenterteilung: **23.09.87 Patentblatt 87/39**

(84) Benannte Vertragsstaaten: **BE DE FR GB IT NL SE**

(56) Entgegenhaltungen:
**FR-A-2 181 064**

**PATENTS ABSTRACTS OF JAPAN, Band 1, Nr. 17, 23. März 1977, Seite 887 C 76**
**PATENTS ABSTRACTS OF JAPAN, Band 1, Nr. 75, 19. July 1977, Seite 1456 C 76**

(73) Patentinhaber: **BASF Aktiengesellschaft, Carl-Bosch- Strasse 38, D-6700 Ludwigshafen (DE)**

(72) Erfinder: **Heinz, Gerhard, Dr., Im Vogelsang 2, D-6719 Weisenheim (DE)**
Erfinder: **Schuette, Wilhelm, Dr., Frankstrasse 5, D-6720 Speyer (DE)**
Erfinder: **Simon, Georg Nikolaus, Dr., Untere Hart 10, D-6703 Limburgerhof (DE)**

**EP 0 181 542 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Es ist bekannt, Polyoxymethylene mit Zusatzstoffen zu versehen, um bestimmte physikalische Eigenschaften der Polyoxymethylene zu verbessern und deren Einsatzmöglichkeite, zu erweitern. Aus der DE-OS 23 19 359 ist es bereits bekannt, Polyoxymethylene mit Wollastonit als verstärkenden Füllstoff ohne Mitverwendung von Kupplungskomponenten auszurüsten, um die Steifigkeit der thermoplastischen Formmasse zu erhöhen. Weiter ist aus der EP-Anmeldung 19 761 bekannt, daß man thermoplastischen Formmassen aus Polyoxymethylenen und Glasfasern Alkoxymethylmelamine zusetzt. Diese Mischungen weisen eine Reihe von günstigen Eigenschaften, wie hohe Zugfestigkeit, Biegefestigkeit, Schlagfestigkeit, Maßhaltigkeit und E-Modul, auf. Diese sind jedoch für Anwendungsgebiete, bei denen eine hohe Abriebfestigkeit verlangt wird, unzureichend. Zur Erhöhung der Abriebfestigkeit wurde Polyoxymethylenformmassen bereits Polytetrafluorethylen zugesetzt. Beispielsweise ist aus der DE-AS 1 569 243 bekannt, daß man Polyoxymethylenformmassen bis zu 40 Gew.-% Polytetrafluorethylenfasern zusetzt. Abgesehen davon, daß es eines relative hohen Zusatzes an Polytetrafluorethylen bedarf, um ausreichende Abriebfestigkeiten zu erzielen, sind solche Formmassen noch verbesserungsbedürftig. Zudem geben solche Formmassen bei hohen Temperaturen, z. B. im Brandfalle, toxische Gase ab.

Es war die technische Aufgabe gestellt, thermoplastische Polyoxymethylenformmassen zur Verfügung zu stellen, die sich durch gute mechanische Eigenschaften, wie Zugfestigkeit, Biegefestigkeit, E-Modul und zusätzlich durch eine hohe Abriebfestigkeit auszeichnen und die zudem bei hohen Temperaturen keine toxischen Bestandteile abgeben.

Diese technische Aufgabe wird gelöst durch thermoplastische Polyoxymethylenformmassen mit hoher Abriebfestigkeit, enthaltend

A) 40 bis 94,7 Gew.-Teile eines Polyoxymethylens

B) 5 bis 50 Gew.-Teile Wollastonit

C) 0,2 bis 5 Gew.-Teile N-Hydroxymethylmelamine, in denen die Hydroxymethylgruppen zumindest partiell mit Alkanolen verethert sind

D) 0,1 bis 5 Gew.-Teile Siliconöl mit einem Polykondensationsgrad n von 10 bis 5 000 und/oder

E) 0,1 bis 10 Gew.-Teile Polyethylen und/oder Copolymere von Ethylen mit α-Olefinen mit einem Molekulargewicht von 100 000 bis 1 000 000 wobei sich die Gew.-Teile der Komponenten A, B, C und D auf 100 Gew.-Teile ergänzen, sowie

F) gegebenenfalls Zusatzstoffe in wirksamen Mengen.

Die neuen Formmassen haben den Vorteil, daß sie sich durch gute mechanische Eigenschaften, wie Zugfestigkeit, Biegefestigkeit, Maßhaltigkeit und E-Modul auszeichnen und zusätzlich eine ausgezeichnete Abriebfestigkeit aufweisen. Im Brandfalle geben sie keine agressiven und toxischen Gase ab.

Geeignete Polyoxymethylene (Komponente A) sind Homopolymere des Formaldehyds oder Copolymere des Formaldehyds sowie des Trioxans mit cyclischen und/oder linearen Formalen, wie Butandiolformal oder Epoxiden wie Ethylen- oder Propylenoxid. Die Homopolymeren haben in der Regel thermisch stabile Endgruppen, wie Ester- oder Ethergruppen. Die Copolymeren des Formaldehyds oder des Trioxans weisen vorteilhaft mehr als 50 %, insbesondere mehr als 75 % Oxymethylengruppen auf. Besonders bewährt haben sich Copolymere, in denen mindestens 0,1 % Gruppen des Comonomeren enthalten sind, die mindestens zwei benachbarte Kohlenstoffatome in der Kette haben. Besondere technische Bedeutung haben Polyoxymethylene erlangt, die 1 bis 10 Gew.-% Comonomere enthalten. Solche Copolymere sind in an sich bekannter Weise durch kationische Copolymerisation von Trioxan mit geeigneten Comonomeren wie cyclischen Ethern oder Acetalen, z. B. Ethylenoxid, 1,3-Dioxolan, 1,3-Dioxan, 1,3-Dioxyacylcycloheptan oder mit linearen Oligo oder Polyformalen, wie Polydioxolan oder Polybutandiolformal erhältlich. In der Regel haben die verwendeten Polyoxymethylene ein Molekulargewicht $M_n$ von $20 \times 10^2$ bis $50 \times 10^3$ und einen MFI bei 190°C, 21,17 N nach DIN 53 735 von 2 bis 50. Besondere Bedeutung haben Polymere, die aus Trioxan und 1 bis 10 Mol.-% Butandiolformal aufgebaut sind, erlangt. Die erfindungsgemäßen Formmassen enthalten 40 bis 94,7 Gew.-Teile, insbesondere 60 bis 85 Gew.-Teile mindestens eines Polyoxymethylens.

Als Komponente B enthalten die erfindungsgemäßen Formmassen 5 bis 50 Gew.-Teile, insbesondere 10 bis 30 Gew.-Teile Wollastonit. Wollastonit ist ein nadelförmiges Kaliziummetasilikat, das in der Regel in einer Teilchengröße von 1 bis 10 µm angewandt wird. Der verwendete Wollastonit kann zusätzlich mit Silanen, z. B. γ-Aminopropyltriethoxysilan ausgerüstet werden.

Als Komponente C enthalten die erfindungsgemäßen Formmassen 0,2 bis 5, insbesondere 0,2 bis 2 Gew.-Teile N-Hydroxymethylmelamine, in denen die Hydroxymethylgruppen zumindest partiell mit Alkanolen verethert sind.

Bevorzugte Melamine enthalten 2 bis 6 Hydroxymethylgruppen, die mit $C_1$-bis $C_4$-Alkanolen partiell verethert sind. Besonders bevorzugt sind Melamine mit mindestens 2, vorzugsweise mindestens 4 Hydroxymethylgruppen, die vollständig mit $C_1$- bis $C_4$-Alkanolen verethert sind. Geeignete Verbindungen sind beispielsweise Dimethoxymethylmelamin, Diethoxymethylmelamin, Triethoxymethylmelamin, Tetramethoxymethylmelamin oder Tetrabutoxymethylmelamin. Besonders bewährt hat sich Tetramethoxymethylmelamin. Die vorgenannten Melaminderivate sind in an sich bekannter Weise erhältlich, wie in Houben-Weyl, Methoden der organischen Chemie, 4. Auflage, Band XIII/I, Seite 368, ausführlich beschrieben wird.

Als wahlweise Komponente D enthalten die Formmassen 0,1 bis 5 Gew.-Teile, insbesondere 0,5 bis 2 Gew.-

Teile Siliconöl mit einem Polykondensationsgrad n von 10 bis 5 000. Geeignete Siliconöle werden beispielsweise in Walter Noll "Chemie und Technologie der Silicone", Verlag Chemie, 1968, Seite 393 bis 396, beschrieben. Geeignete Siloxanverbindungen sind beispielsweise solche der Formel I

$$(R_1)_3-Si-O-[-\underset{\underset{(R_3)_2}{|}}{Si}-O]_n-Si(R_2)_3 \qquad I,$$

in der $R_1$ und $R_2$ gleich oder verschieden sein können und jeweils einen $C_1$- bis $C_4$-Alkylrest oder einen Phenylrest bezeichnen und $R^3$ einen $C_1$-bis $C_4$-Alkylrest, einen Phenylrest oder den Rest der Formel

$$-O-[\overset{|}{\underset{|}{Si}}-O]_n-R_1$$

bezeichnet, in der $R_1$ die oben angegebene Bedeutung hat und n für eine ganze Zahl von 0 bis 50 steht.

Wahlweise anstatt der Komponente D oder zusätzlich zur Komponente D enthalten die erfindungsgemäßen Formmassen 0,1 bis 10 Gew.-Teile, vorzugsweise von 0,5 besonders 1,0 bis 5 Gew.-Teile Polyethylen und/oder Copolymere von Ethylen mit α-Olefinen mit einem Molgewicht von 100 000 bis 1 000 000. Geeignete α-Olefine haben vorteilhaft 3 bis 6 Kohlenstoffatome. Comonomere sind vorteilhaft in Mengen von 1 bis 15 Mol-% enthalten. Besonders bevorzugt verwendet man Polyethylen hoher oder niedriger Dichte.

Die Gew.-Teile der Komponenten A, B, C und D ergänzen sich auf 100 Gew.-Teile. Zusätzlich können die erfindungsgemäßen Formmassen Zusatzstoffe (Komponente F) in wirksamen Mengen enthalten. Als Zusatzstoffe seien gennannt Hitze- und Lichtstabilisatoren, Gleit- und Entformungsmittel, Färbemittel, wie Farbstoffe und Pigmente in üblichen wirksamen Mengen. Geeignete Zusatzstoffe sind auch Alkoxymethylenharnstoffe, wie N,N-Dimethoxymethylharnstoff, N,N-Dimethoxymethylharnstoff, N,N-Diethoxymethylharnstoff oder N,N,N-Trimethoxymethylharnstoff. Geeignete Zusatzstoffe sind auch Glasfasern, ferner kautschukelastische Polymere zur Verbesserung der Schlagzähigkeit, wie Urethankautschuke oder Pfropfkautschuke auf Basis Polybutadien oder Polyacrylestern.

Die erfindungsgemäßen thermoplastischen Formmassen erhält man durch Vermischen der Ausgangskomponenten nach beliebigen bekannten Verfahren, bei denen ein im wesentlich homogenes Gemisch erhalten wird. Beispielsweise können die Komponenten B bis E den plastifizierten Polyoxymethylenen zugemischt werden, z. B. in einer Schneckenpresse. Es ist auch möglich, die Ausgangsstoffe vorher zu mischen und das Gemisch in einer Schneckenpresse zu plastifizieren.

Die erfindungsgemäßen Polyoxymethylenformmassen eignen sich zur Herstellung von Formkörpern durch Spritzguß oder Extrusion.

Der Gegenstand der Erfindung sei an folgenden Beispielen veranschaulicht.

Zur Bestimmung der Abriebfestigkeit wurde die Prüfvorrichtung verwendet, wie sie in der Dissertation Dipl.-Ing. Gunther Erhardt, Universität Karlsruhe, 1980, beschrieben wird. Der Prüfstift aus Polymerwerkstoff wird durch eine Gewichtsbelastung an die drehende Scheibe aus Metall gedrückt. Die Metallscheibe hat einen bestimmten Rauhigkeitsgrad und der Verschleiß des Polymerstifts wird als Änderung der länge des Stifts, bezogen auf die Länge des Gleitweges den die drehende Scheibe in der höhe des Stifts zurückgelegt hat, ausgedrückt. Dieser Wert wird als Gleitverschleißrate bezeichnet und hat die Dimension µm/km.

**Beispiele 1 bis 14**

Es wurden die in der nachfolgenden Tabelle angegeben Komponenten auf einem Doppelschneckenextruder bei 200°C gemischt, gestrangt, abgekühlt und zerkleinert. Aus dem Granulat wurde durch Spritzgießen und mechanische Bearbeitung der für die Gleitprüfung erforderliche Stift hergestellt. Geprüft wurde bei Zimmertemperatur mit einer Stahlscheibe der Rauhigkeitszahl 2 bis 2,8 µm. Der Stift wurde mit 1 $N/mm^2$ Anpreßdruck belastet. Die Umlaufgeschwindigkeit der Scheibe betrug 0,5 m/sec.

Die Beispiele 5, 10, 11 und 12 sind erfindungsgemäß.

Die Beispiele 1 bis 4, 6 bis 9 sowie 13 und 14 sind Vergleichsbeispiele.

**Tabelle**

| Gew.Teile | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| POM[1] | 100 | 99 | 79,5 | 89,75 | 88,75 | 95 | 95 | 97,5 | 97,5 | 87,25 | 87,25 | 86,25 | 99 | 80 |
| Wollastonit | - | - | 20 | 10 | 10 | | | - | - | 10 | 10 | 10 | - | |
| Siliconöl[2] | - | 1 | - | - | 1 | | | - | - | | | 1 | - | |
| Polyethylen[3] | - | - | - | - | - | 5 | 5 | 2,5 | 2,5 | 2,5 | 2,5 | 2,5 | - | |
| Methoxy[4] Methylamin | - | - | 0,5 | 0,25 | 0,25 | - | - | - | - | 0,25 | 0,25 | 0,25 | - | |
| PTFE | - | - | - | - | - | | | | - | - | - | - | | 20 |
| Verschleißrate µ/km | 50 | 36 | 19 | 12 | 5 | 35 | 8 | 50 | 17 | 3 | 3 | 2,5 | 50 | 2,5 |

1) Polyoxymethylen und ca. 3 Gew.-% Butandiolformal, MFI = 9 g/10 min bei 190°, 21,17 N (DIN 53 735)
2) Methylphenylpolysiloxan, kinem. Viskosität bei 20° C, 500 $mm^2/s$
3) Polyethylen, Dichte 0.952, MFI = 2 g/10 min bei 190°, 211.76 N (DIN 53 735)
4) Tetramethoxyhexamethylolmelamin

**Patentansprüche**

1. Thermoplastische Polyoxymethylenformmassen mit hoher Abriebfestigkeit, enthaltend
A) 40 bis 94,7 Gew.-Teile eines Polyoxymethylens
B) 5 bis 50 Gew.-Teile Wollastonit
C) 0,2 bis 5 Gew.-Teile N-Hydroxymethylmelamine, in denen die Hydroxymethylgruppen mindestens partiell mit Alkanolen verethert sind
D) 0,1 bis 5 Gew.-Teile Siliconöl mit einem Polykondensationsgrad n von 10 bis 5 000 und/oder
E) 0,1 bis 10 Gew.-Teile Polyethylen und/oder Copolymere von Ethylen und α-Olefinen mit einem Molekulargewicht von 100 000 bis 1 000 000,
wobei sich die Gew.-Teile der Komponenten A, B, C und D auf 100 Gew.-Teile ergänzen, sowie
F) ggf. Zusatzstoffe in wirksamen Mengen.
2. Thermoplastische Polyoxymethylenformmassen nach Anspruch 1, dadurch gekennzeichnet, daß sie 0,2 bis 2 Gew.-Teile N-Hydroxymethylmelamine, mit 2 bis 6 Hydroxylgruppen, die zumindest partiell mit $C_1$- bis $C_4$-Alkanolen verethert sind, enthalten.
3. Thermoplastische Polyoxymethylenformmassen nach den Ansprüchen 1 und 2, dadurch gekennzeichnet, daß sie 0,5 bis 2 Gew.-Teile Siliconöl enthalten.
4. Thermoplastische Polyoxymethylenformmassen nach den Ansprüchen 1 bis 3, dadurch gekennzeichnet, daß sie 1 bis 5 Gew.-Teile Polyethylen enthalten.

**Revendications**

1. A thermoplastic polyoxymethylene molding material having high abrasion resistance, which contains
A) from 40 to 94.7 parts by weight of a polyoxymethylene,
B) from 5 to 50 parts by weight of wollastonite,
C) from 0.2 to 5 parts by weight of N-hydroxymethylmelamines in which some or all of the hydroxymethyl groups are etherified with allkanols,
D) from 0.1 to 5 parts by weight of a silicone oil having a degree of polycondensation n of from 10 to 5,000, and/or
E) from 0.1 to 10 parts by weight of polyethylene and/or copolymers of ethylene and α-olefins having a molecular weight of from 100,000 to 1,000,000,
the number of parts by weight of components A, B, C and D adding up to 100, with or without
F) effective amounts of additives.
2. A thermoplastic polyoxymethylene molding material as claimed in claim 1, which contains from 0.2 to 2 parts by weight of an N-hydroxymethylmelamine containing from 2 to 6 hydroxyl groups, some or all of which are etherified with $C_1$-$C_4$-alkanols.
3. A thermoplastic polyoxymethylene molding material es claimed in claims 1 and 2, which contains from 0.5 to 2 parts by weight of silicone oil.
4. A thermoplastic polyoxymethylene molding material es claimed in claims 1 to 3, which contains from 1 to 5 parts by weight of polyethylene.

**Revendications**

1. Matières à mouler thermoplastiques à base de polyoxyméthylène, possédant une résistance à l'abrasion élevée, constituées de:

A) 40 à 94,7 parties en poids d'un polyoxyméthylène,

B) 5 à 50 parties en poids de wollastonite,

C) 0,2 à 5 parties en poids de N-hydroxyméthyl-mélamines, dont les groupes hydroxyméthyle sont éthérifiés au moins partiellement par des alcanols,

D) 0,1 à 5 parties en poids d'une huile de silicone avec un degré de polycondensation n de 10 à 5 000 et(ou)

E) 0,1 à 10 parties en poids de polyéthylène et(ou) de copolymères de l'éthylène et d'α-oléfines d'un poids moléculaire compris entre 100 000 et 1 000 000,

la somme des parties en poids des composants A, B, C et D étant égale à 100, ainsi qu'éventuellement

F) des additifs en des proportions efficaces.

2. Matières à mouler thermoplastiques à base de polyoxyméthylène suivant la revendication 1, caractérisées en ce qu'elles contiennent 0,2 à 2 parties en poids de N-hydroxyméthyl-mélamines avec deux à six groupes hydroxyle éthérifiés au moins partiellement par des alcanols en $C_1$ à $C_4$.

3. Matières à mouler thermoplastiques à base de polyoxyméthylène suivant les revendications 1 et 2, caractérisées en ce qu'elles contiennent 0,5 à 2 parties en poids d'huile de silicone.

4. Matières à mouler thermoplastiques à base de polyoxyméthylène suivant les revendications 1 à 3, caractérisées en ce qu'elles contiennent 1 à 5 parties en poids de polyéthylène.